# EUROPEAN PATENT APPLICATION

(11) **EP 4 734 061 A1**
(43) Date of publication of application: **29.04.2026**
(21) Application number: 24306807.9
(22) Date of filing: 25.10.2024
(51) Int. Cl.: G06T 9/00, H04N 19/46, H04N 19/597, H04N 19/70, G06T 9/40

(54) **ENCODING A POINT CLOUD WITH HOLE DETECTION AND FILLING**

(71) Applicant: InterDigital CE Patent Holdings, SAS, 75017 Paris (FR)
(72) Inventor: THUDOR, Franck, 35000 RENNES (FR); SCHNEIDER, Jan Alexander, 52074 AACHEN (DE); CHUPEAU, Bertrand, 35700 RENNES (FR); SANDRI, Gustavo, 35510 CESSON-SEVIGNE (FR)
(74) Representative: Vossius & Partner Patentanwälte Rechtsanwälte mbB

(57) **Abstract**

A point cloud with attributes is obtained. Its geometry is encoded and decoded. Holes are detected in the decoded geometry and metadata representative of coordinates of the holes are generated. In an embodiment, points are added at these locations to obtain a reconstructed geometry. The attributes of the point cloud are transferred on the decoded or on the reconstructed geometry and, the decoded geometry, the transferred attributes, and the metadata are encoded in a data stream. At the decoding side, a data stream representative of a point cloud is obtained. The geometry is decoded. In an embodiment, metadata are used to add point to the decoded geometry. The attributes of the point cloud are decoded the decoded or reconstructed geometry. In the first case, metadata are used to add points to the point cloud and their attributes are estimated according to the decoded attributes.

## Description

### 1. Technical Field

The present principles generally relate to the domain of encoding, transmitting and decoding point clouds with attributes. In particular, the present principles relate to detecting holes in a decoded geometry and adding points the location of the holes to transfer the attributes on this reconstructed geometry.

### 2. Background

The present section is intended to introduce the reader to various aspects of art, which may be related to various aspects of the present principles that are described and/or claimed below. This discussion is believed to be helpful in providing the reader with background information to facilitate a better understanding of the various aspects of the present principles. Accordingly, it should be understood that these statements are to be read in this light, and not as admissions of prior art.

Advances in 3D capturing and rendering technologies are enabling new applications and services in the fields of autonomous driving, cultural heritage archival, immersive telepresence, and virtual/augmented reality. Point clouds have arisen as one of the main 3D scene representations for such applications. A point cloud frame consists of a set of 3D points, wherein each point is unrelated to other points. Each point is dimensionless and is represented with its 3D position (coordinates) and possibly several attributes such as color, transparency, reflectance, etc. A standardization activity for point cloud compression is carried out, for example, by the ISO/IEC JTC1/SC29/WG7 "MPEG 3D Graphics and Haptics Coding" group, with the first edition of the Geometry-based Point Cloud Compression (G-PCC) standard, part 9 of the ISO/IEC 23090 series on the coded representation of immersive media published. From the framework of G-PCC second edition under construction, the compression of solid dynamic point clouds with a geometry-based approach (that is in the 3D space domain, without 3D-to-2D round trip to leverage existing 2D video codecs) has been identified as a separate target, and a specific part denoted Solid G-PCC is under development within MPEG. The current encoder includes a trisoup (standing for "soup of triangles") geometry encoder, as it demonstrates the best geometry compression performance.

A trisoup geometry encoder relies on a surface approximation of the point cloud to encode. This results in a reduced processing time both at encoder and decoder side, and in a reduced bitstream size. At the same time, this approximation of the object geometry leads to some artifacts. Indeed, because of the vertices' definition and because of the vertices' quantization, geometry continuity is not ensured between blocks, and some "holes" may appear at the frontier of adjacent blocks. A "hole" is an empty voxel surrounded by populated voxels, that destroy the watertight surface characteristic. So, there is a lack for a solution that leverages the trisoup advantages and that detects and fill the holes at the same time.

### 3. Summary

The following presents a simplified summary of the present principles to provide a basic understanding of some aspects of the present principles. This summary is not an extensive overview of the present principles. It is not intended to identify key or critical elements of the present principles. The following summary merely presents some aspects of the present principles in a simplified form as a prelude to the more detailed description provided below.

A point cloud with attributes is obtained. Its geometry is encoded and decoded. Holes are detected in the decoded geometry and metadata representative of coordinates of the holes are generated. In an embodiment, points are added at these locations to obtain a reconstructed geometry. The attributes of the point cloud are transferred on the decoded or on the reconstructed geometry and, the decoded geometry, the transferred attributes, and the metadata are encoded in a data stream. At the decoding side, a data stream representative of a point cloud is obtained. The geometry is decoded. In an embodiment, metadata are used to add point to the decoded geometry. The attributes of the point cloud are decoded the decoded or reconstructed geometry. In the first case, metadata are used to add points to the point cloud and their attributes are estimated according to the decoded attributes.

The present principles relate to a method for encoding a point cloud with attributes. The method comprises obtaining an encoded geometry and a decoded geometry of the point cloud. Holes are detected in the decoded geometry and metadata representative of coordinates of the detected holes are generated. A hole is a non-occupied voxel of the decoded geometry. For each axis of the frame of reference of the decoded geometry, if neighbor voxels of the non-occupied voxel along the axis are non-occupied and if other neighbor voxels in a three-by-three volume around the non-occupied voxel form a ring, the non-occupied voxel location is added to the detected locations of holes. Then, the attributes of the input point cloud are transferred on the decoded geometry to obtain transferred attributes, and the encoded geometry, the transferred attributes and the metadata are encoded in a data stream. In an embodiment, points are added in the detected holes to obtain a reconstructed geometry and the attributes of the point cloud are transferred on the reconstructed geometry to obtain the transferred attributes.

The present principles also relate to a device comprising a processor and a memory associated with the processor that is configured to implement the method above.

The present principles relate to a method for decoding a point cloud with attributes. The method comprises retrieving, from a data stream, data representative of a geometry, of the attributes of the point cloud, and metadata representative of coordinates of holes. The geometry is decoded to obtain a decoded geometry. The attributes are decoded for the decoded geometry, and the metadata are used to add points to the decoded geometry. The attributes of the added points are estimated as a function of decoded attributes. In an embodiment, the metadata are used to add points to the decoded geometry to obtain a reconstructed geometry and the attributes are decoded for the reconstructed geometry.

The present principles also relate to a device comprising a processor and a memory associated with the processor that is configured to implement the method above.

### 4. Brief Description of Drawings

The present disclosure will be better understood, and other specific features and advantages will emerge upon reading the following description, the description making reference to the annexed drawings wherein:
- **Figure 1** illustrates a G-PCC scheme wherein geometry and attributes are sequentially compressed;
- **Figure 2** illustrates holes created in a model by a trisoup encoding and decoding;
- **Figure 3** shows an example architecture of a device which may be configured to implement encoding and/or decoding methods according to an embodiment of the present principles;
- **Figure 4** shows an example of an embodiment of the syntax of a stream when the data are transmitted over a packet-based transmission protocol;
- **Figure 5A** illustrates a first embodiment of a scheme for the encoding of a 3D point cloud with attributes according to the present principles;
- **Figure 5B** illustrates an embodiment of a scheme for the decoding of a 3D point cloud with attributes encoded according to the encoding method presented in Figure 5A;
- **Figure 5C** illustrates a second embodiment of a scheme for the encoding of a 3D point cloud with attributes according to the present principles;
- **Figure 5D** illustrates an embodiment of a scheme 540 for the decoding of a 3D point cloud with attributes encoded according to the encoding method presented in Figure 5C;
- **Figure 6** shows a first method for hole detection according to the present principles;
- **Figure 7** illustrates five ring arrangements for the ring detection according to the first hole detection method;
- **Figure 8** shows a result of this first hole detection method;
- **Figure 9** illustrates another embodiment in which the shape and size of the hole to be detected are generic.

### 5. Detailed description of embodiments

The present principles will be described more fully hereinafter with reference to the accompanying figures, in which examples of the present principles are shown. The present principles may, however, be embodied in many alternate forms and should not be construed as limited to the examples set forth herein. Accordingly, while the present principles are susceptible to various modifications and alternative forms, specific examples thereof are shown by way of examples in the drawings and will herein be described in detail. It should be understood, however, that there is no intent to limit the present principles to the particular forms disclosed, but on the contrary, the disclosure is to cover all modifications, equivalents, and alternatives falling within the spirit and scope of the present principles as defined by the claims.

The terminology used herein is for the purpose of describing particular examples only and is not intended to be limiting of the present principles. As used herein, the singular forms "a", "an" and "the" are intended to include the plural forms as well, unless the context clearly indicates otherwise. It will be further understood that the terms "comprises", "comprising," "includes" and/or "including" when used in this specification, specify the presence of stated features, integers, steps, operations, elements, and/or components but do not preclude the presence or addition of one or more other features, integers, steps, operations, elements, components, and/or groups thereof. Moreover, when an element is referred to as being "responsive" or "connected" to another element, it can be directly responsive or connected to the other element, or intervening elements may be present. In contrast, when an element is referred to as being "directly responsive" or "directly connected" to other element, there are no intervening elements present. As used herein the term "and/or" includes any and all combinations of one or more of the associated listed items and may be abbreviated as"/".

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element without departing from the teachings of the present principles.

Although some of the diagrams include arrows on communication paths to show a primary direction of communication, it is to be understood that communication may occur in the opposite direction to the depicted arrows.

Some examples are described with regard to block diagrams and operational flowcharts in which each block represents a circuit element, module, or portion of code which comprises one or more executable instructions for implementing the specified logical function(s). It should also be noted that in other implementations, the function(s) noted in the blocks may occur out of the order noted. For example, two blocks shown in succession may, in fact, be executed substantially concurrently or the blocks may sometimes be executed in the reverse order, depending on the functionality involved.

Reference herein to "in accordance with an example" or "in an example" means that a particular feature, structure, or characteristic described in connection with the example can be included in at least one implementation of the present principles. The appearances of the phrase in accordance with an example" or "in an example" in various places in the specification are not necessarily all referring to the same example, nor are separate or alternative examples necessarily mutually exclusive of other examples.

Reference numerals appearing in the claims are by way of illustration only and shall have no limiting effect on the scope of the claims. While not explicitly described, the present examples and variants may be employed in any combination or sub-combination.

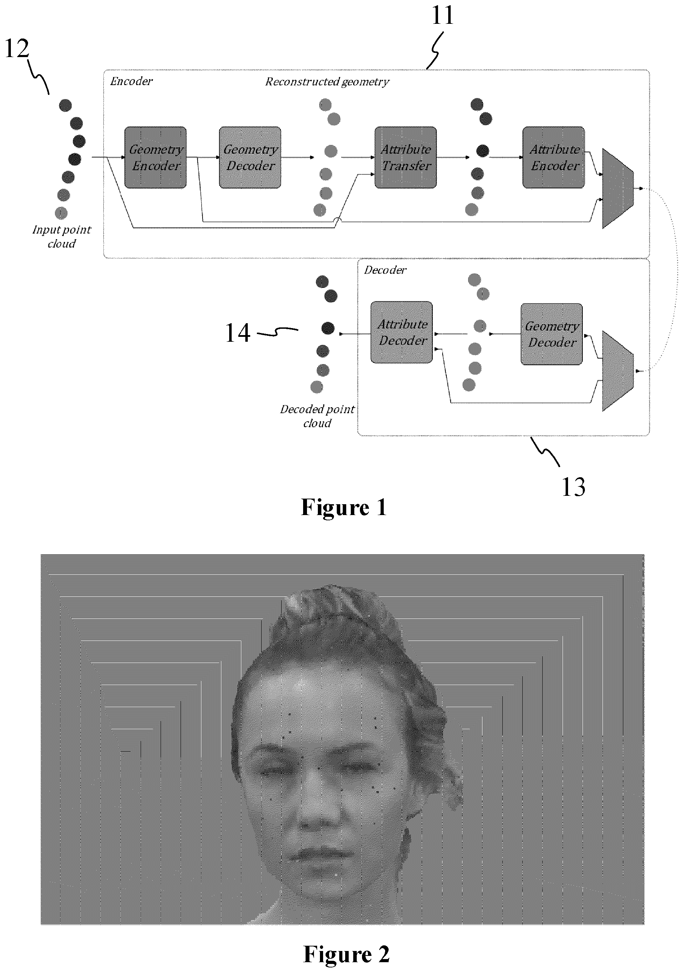

**Figure 1** illustrates a G-PCC scheme wherein geometry and attributes are sequentially compressed. In the encoder 11, a point cloud 12 with attributes (for example color or transparency) is obtained from a source. The geometry is first compressed, for example by dividing the 3D space of the 3D point cloud in voxels and representing it as an octree. Then the geometry is decompressed and the attributes are transferred onto the decompressed geometry to be compressed, for example with RAHT techniques. Currently, RAHT is not a parallelisable transform as it encodes the entire frame's attributes together. In addition, the encoding of the attributes is dependent on the results of the geometry encoder, which introduces errors if the geometry encoding is lossy. Therefore, the encoding of the geometry cannot be executed in parallel with the encoding of the attributes, as one needs to transfer the attributes to the decoded geometry prior to encoding the point cloud attributes. The same problem occurs at the decoder 13 wherein the geometry must be fully decompressed before than the attributes are decompressed on the decompressed geometry to obtain a decoded point cloud 14 with attributes.

**Figure 2** illustrates holes created in a model by a trisoup encoding and decoding. Depending on the viewport position and orientation, these holes might lead to rendering issues. As an illustration, the following table shows how many holes can be detected in one frame of the reference "longdress" sequence. Detection is further differentiated according to the different kind of holes that are detected. Some holes can be detected along multiple orientations. Only distinct holes are reported in this table, leading to a total number of detected holes of 9702 (over the 718k points for this frame).

| Axis orientation for detection | Number of distinct holes detected (and relative number with respect to the number of points) | |
|---|---|---|
| x-axis | 4626 | 0.644% |
| y-axis | 1315 | 0.183% |
| z-axis | 2615 | 0.364% |
| Total_1 | 8556 | 1.192% |
| x-and y- axis | 453 | 0.063% |
| y-and z-axis | 248 | 0.035% |
| z-and x-axis | 445 | 0.062% |
| Total_2 | 1146 | 0.160% |
| Total_1 + Total_2 | 9702 | 1.35% |

Moreover, artefacts are likely to be more visible in some regions of interest of the displayed model, like the face of a character.

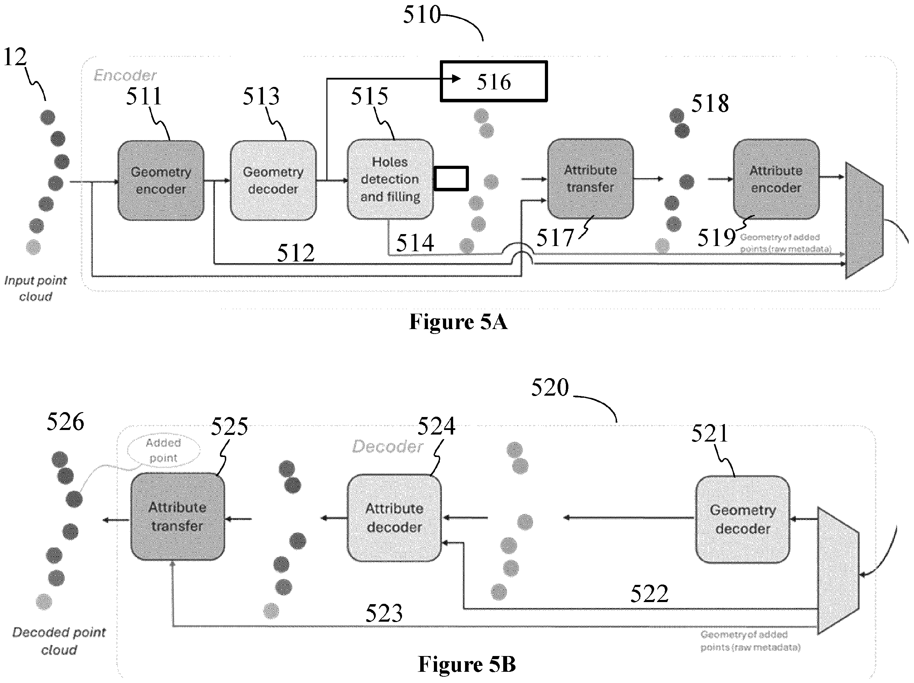

**Figure 5A** illustrates a first embodiment of a scheme 510 for the encoding of a 3D point cloud with attributes according to the present principles. According to the present principles, an input point cloud 12 with attributes is obtained from a source. At a step 511, the geometry of the input point cloud is encoded to obtain an encoded geometry that is stored in a data stream. At a step 513, the encoded geometry is decoded to obtain a decoded geometry 516. At step 515, holes are detected in the decoded geometry and the coordinates of detected holes are transmitted as metadata 514 in the bitstream to the decoder. The coordinates (depending of the frame of reference of the point cloud, for example xyz) of the holes may be encoded in Supplemental Enhancement Information (SEI) messages or, for example, stored in a dedicated syntax of element of the data stream. The entire set of points from input point cloud 12 is available for transferring the attributes towards decoded points at a step 517. So, attributes 518 are generated for every decoded points. At step 519, attributes 518 are encoded in the data stream with encoded geometry 512 and metadata 514.

**Figure 5B** illustrates an embodiment of a scheme 520 for the decoding of a 3D point cloud with attributes encoded according to the encoding method presented in Figure 5A. Points are elementary voxels, that is the lowest level of the division of the 3D space. So, herein, point stands for voxel and reciprocally. A data stream comprising a geometry, attributes and metadata representative of a point cloud with attributes is obtained. At a step 521, the geometry is decoded to obtain a decoded geometry. At a step 524, the attributes 522 are decoded for the decoded geometry to obtain a first point cloud with attributes. At a step 525, the metadata are used to add some points to the first point cloud with attributes to generate a second point cloud 526 with additional points. The attributes of the added points are determined according to the decoded attributes, for example, by attributing the attributes of the closest neighbour to the added point or by interpolating attributes of n closest points.

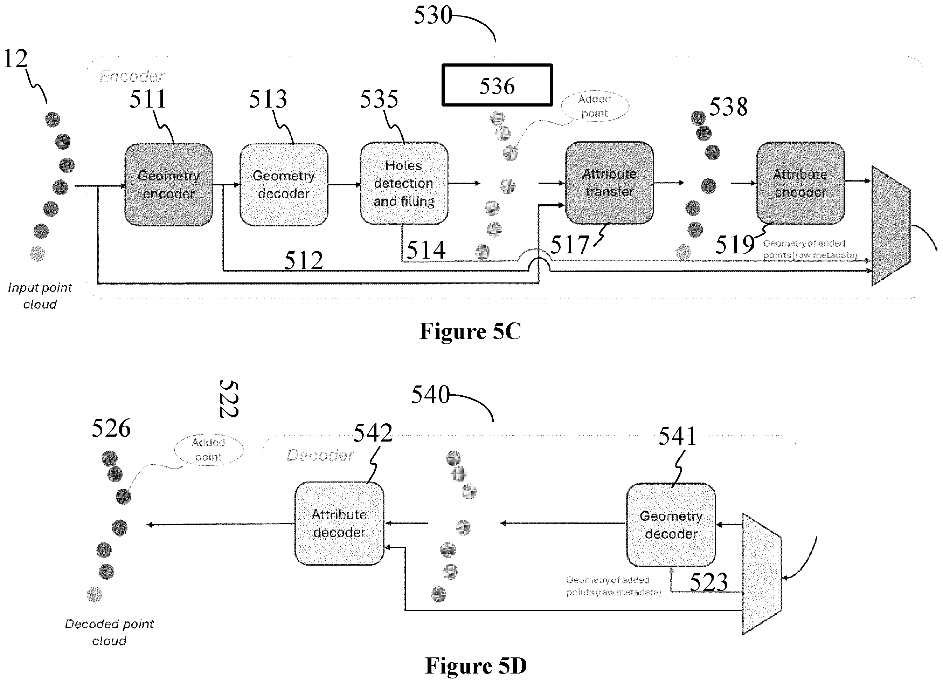

**Figure 5C** illustrates a second embodiment of a scheme 530 for the encoding of a 3D point cloud with attributes according to the present principles. According to the present principles, an input point cloud 12 with attributes is obtained from a source. As in the first embodiment, at a step 511, the geometry of the input point cloud is encoded to obtain an encoded geometry that is stored in a data stream. At a step 513, the encoded geometry is decoded to obtain a decoded geometry. At step 535, holes are detected in the decoded geometry and the coordinates of detected holes are transmitted as metadata 514 in the bitstream to the decoder. The coordinates (depending of the frame of reference of the point cloud, for example xyz) of the holes may be encoded in Supplemental Enhancement Information (SEI) messages or, for example, stored in a dedicated syntax of element of the data stream. At, this step, points are added to the decoded geometry at the coordinates of the holes to obtain a reconstructed geometry 536 with additional points. The entire set of points from input point cloud 12 is available for transferring the attributes towards decoded points at a step 517. So, attributes 588 are generated for every decoded and added points. At step 519, attributes 518 are encoded in the data stream with encoded geometry 512 and metadata 514. That means, attributes 538 comprise information for points that are not encoded in geometry 512 but encoded as metadata 514.

**Figure 5D** illustrates an embodiment of a scheme 540 for the decoding of a 3D point cloud with attributes encoded according to the encoding method presented in Figure 5C. Points are elementary voxels, that is the lowest level of the division of the 3D space. So, herein, point stands for voxel and reciprocally. A data stream comprising a geometry, attributes and metadata representative of a point cloud with attributes is obtained. At a step 541, the geometry is decoded to obtain a decoded geometry, and metadata 523 are used to add points to the decoded geometry to generate a reconstructed geometry. At step 542, attributes 522 are decoded for the reconstructed geometry to generate a point cloud 526 with attributes. Point cloud 526 of method 540 is the same than point cloud 526 of method 520.

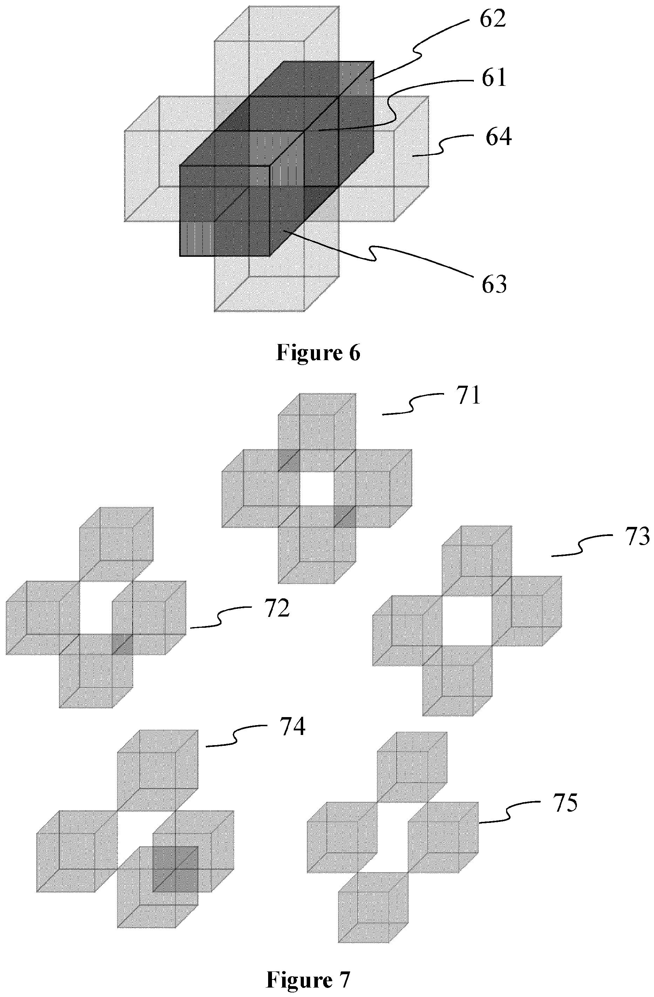

**Figure 6** shows a first method for hole detection according to the present principles. In this first method, a hole is considered to be an unoccupied 1x1x1 voxel 61, denoted as "p". For the purpose of the hole detection algorithm, a 3x3x3 set of voxels is considered, and center voxel 61 is detected as a hole when the following criteria are met. First, the center voxel is not occupied (it contains no point). Second, along one axis, the direct neighbours 62 and 63 in both directions are not occupied. Third, there is a ring of four continuously touching voxels 64 around the center voxel in the other two axes. In a variant, the 4 touching voxels share a common face with the center voxel, and the ring is in one plane. In another variant, at least 2 out of the 4 voxels in the rings share a common face with the center voxel. The following pseudo code is given as an example for performing the first hole detection method (also called one axis hole detection). Each voxel p of the voxelized volume V under consideration will be tested, and a set of holes is generated.

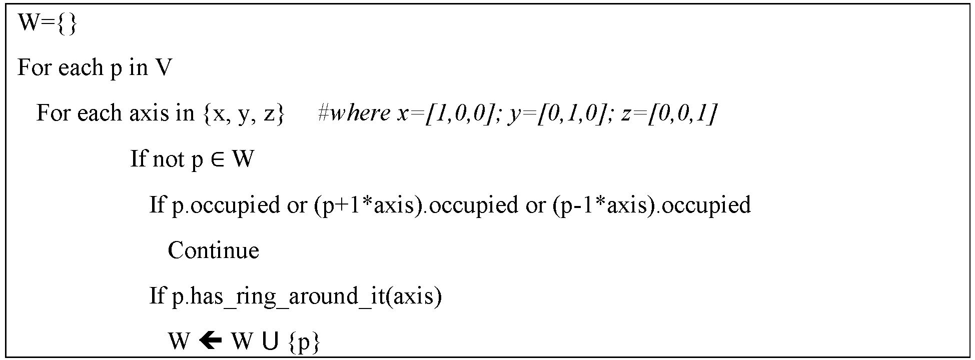

**Figure 7** illustrates five ring arrangements for the ring detection according to the first hole detection method. The method "has_ring_around_it" handles the different variants. Some ring detection can occurs multiple times. In variant 71, the 4 voxels are arranged in one plane as shown on Figure 6. More than 4 neighbour voxels may exist, and thus multiple rings may be present simultaneously. In variant 72, one of the filled neighbours is on another plane than the three others. In variant 74 and variant 75, two planes with a center element equally fill the same hole. In variant 75, the ring has two opposite voxels out of plane in different directions.

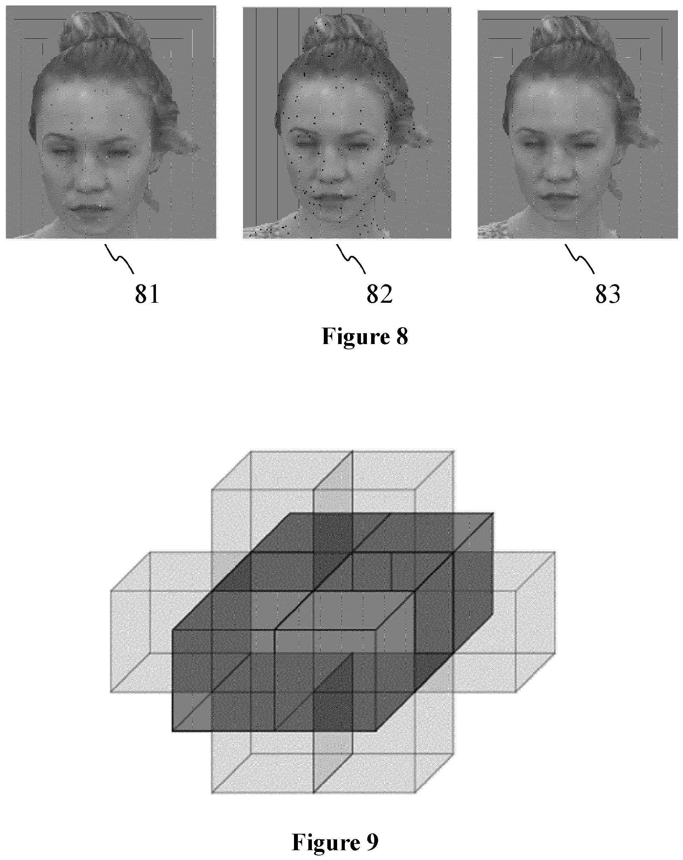

**Figure 8** shows a result of this first hole detection method. Image 71 shows the renered model without the hole detection. On image 72, holes are detected and on image 73, they are filled with attribute information coming from the neighborhood, according to the present principles. Different implementations may be considered, for example, to avoid browsing the entire volume V, by keeping the same principles.

In a second hole detection method according to the present principles, the detection is extended to non-aligned axis. For example, xy, yz or zx directions can be added as axis for hole detection. As for the first hole detection method, each of axis combination presents some variants for the ring detection. The following pseudo code illustrates the two-axis hole detection for one of the variants. The "has_ring_around_it" method incorporates a detector adapted to the ring under consideration. A similar pseudocode can be written for all its derivatives.

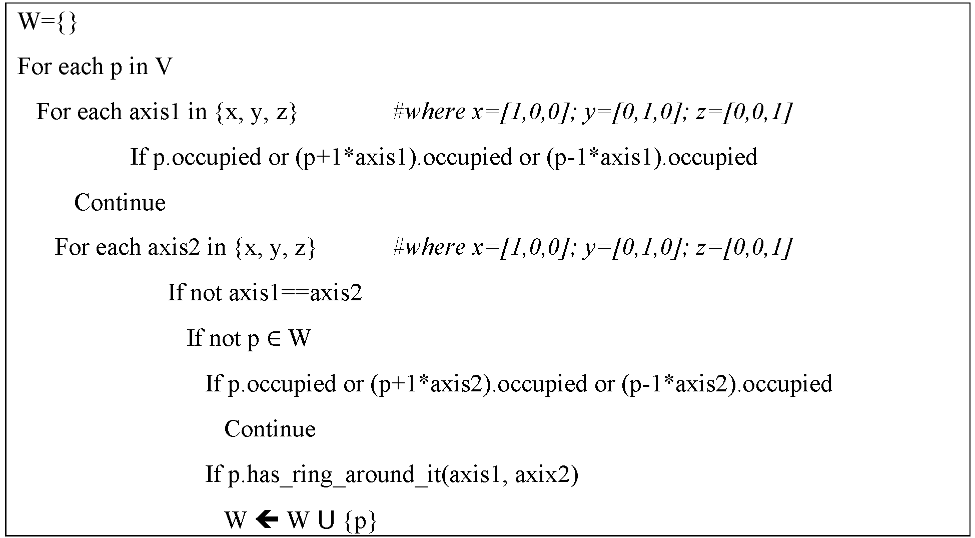

In an embodiment, hole detection step 51 is made optional. Turning on/off hole detection step 51 may happen when the encoder has to handle a big number of parameters, these parameters being set with respect to the content to be encoded. In this embodiment, the decoder must be informed of this state on/off of hole detection step 51. To allow this, the following syntax is proposed for the geometry parameter set level (GPS):

| | |
|---|---|
| geometry_parameter_set() { | Descriptor |
| **gps_geom_parameter_set_id** | u(4) |
| **gps seq_parameter_set_id** | u(4) |
| **slice_geom_origin_scale_present** | u(1) |
| if(¬slice_geom_origin_scale_present) | |
| **gps_geom_origin_log2_scale** | ue(v) |
| **geom_dup_point_counts_enabled** | u(1) |
| **occtree_point_count_list_present_flag** | u(1) |
| **occtree_coded_axis_list_present_flag** | u(1) |
| **occtree_neigh_window_log2_minus1** | u(3) |
| **geom_scaling_enabled_flag** | u(1) |
| if(geom_scaling_enabled_flag) { | |
| **geom_base_qp** | ue(v) |
| **geom_qp_mul_log2** | u(2) |
| **}** | |
| **inter_prediction_enabled**_**flag** | u(1) |
| if(inter_prediction_enabled flag) { | |
| **motion_block_size** | ue(v) |
| **motion**_**min_pu_size** | ue(v) |
| **gof_geom_entropy_continuation_enabled_flag** | u(1) |
| } | |
| **trisoup_enabled_flag** | |
| if(trisoup_enabled_flag) { | |
| **trisoup_non_cubic_node_start_edge_presence_flag** | u(1) |
| **trisoup_non_cubic_node_end_edge_presence_flag** | u(1) |
| if(inter_prediction_enabled_flag) | |
| **trisoup_skip_mode_enabled_flag** | u(1) |
| } | |
| **hole_detection_enabled_flag** | u(1) |
| **gps_extension_present** | u(1) |
| if(gps_extension_present) { | |
| while(more_data_in_data_unit()) | |
| **gps_extension_data** | u(1) |
| } | |
| byte_alignment() | |
| } | |

In another embodiment, the first or the second hole detection method is enabled only for a part of the input point cloud (e.g. the regions of interest like human being faces). This feature applies when a content creator wants to allow a better quality for some regions, typically the head of the character and fasten proceeding of the other parts of the scene. In that case, the decoder must be informed on the part of the point cloud on which the hole detection method has to be applied. The following syntax is proposed, for example, at the geometry parameter set level (GPS).

| | |
|---|---|
| geometry_parameter_set() { | Descriptor |
| ... | |
| **hole_detection_enabled_flag** | u(1) |
| if(**hole_detection_enabled_flag** ) { | |
| **Number**_**of_regions** | u(8) |
| For (i=0; i< **Number**_**of_regions** ; i++) { | |
| **x_min** | u(16) |
| **x_max** | u(16) |
| **y_min** | u(16) |
| **y_max** | u(16) |
| z**_min** | u(16) |
| **z_max** | u(16) |
| } | |
| } | |
| ... | |
| } | |

In another embodiment, the variants tested during the hole detection are limited to a subset of them. This feature is useful when the processing resources of the receiver are limited, or when the input point cloud is likely to produce holes only in a given direction (this fact can be checked at a pre-processing step). The following syntax is proposed, for example at the geometry parameter set level (GPS) to limit the subset of tested hole detection variants.

| |
|---|
| geometry_parameter_set() { |
| ... |
| **hole**_**detection**_**enabled_flag** |
| if(**hole_detection_enabled_flag** ) { |
| **Number**_**of_variants**_**for**_**hole**_**detection** |
| For (i=0; i< **Number_of_variants_for_hole_detection** ; i++) { |
| **hole**_**detection_variant**_**id** |
| } |
| } |
| ... |
| } |

This syntax refers to a look-up table (LUT) in which each variant is associated with an identifier, and this LUT is known by both the encoder and the decoder. An example of such a LUT is presented below:

| Variant (with direction) | hole**_**detection_variant_id |
|---|---|
| vanant_a_x | x0000 |
| variant_a_y | x0001 |
| vanant_a_z | x0002 |
| variant_b1_x to variant_b4_x | x0003 to x0006 |
| variant_b1_y to variant_b4_y | x0007 to x000A |
| variant_b1_z to variant_b4_z | x000B to x000E |
| variant_c_x to variant_c_z | x000F to x0011 |
| variant_d_x to variant_d_z | x0012 to x0014 |
| ... | ... |

**Figure 9** illustrates another embodiment in which the shape and size of the hole to be detected are generic. Indeed, the pseudo code of the first hole detection method is extended without limitation to a hole with different shape, by adapting the criteria to find a hole. For instance, two adjacent empty voxels may be found, each of them having the forward and backward voxels not empty and a ring of voxels surrounding them. As with variants of the first hole detection method, this ring could be differently shaped.

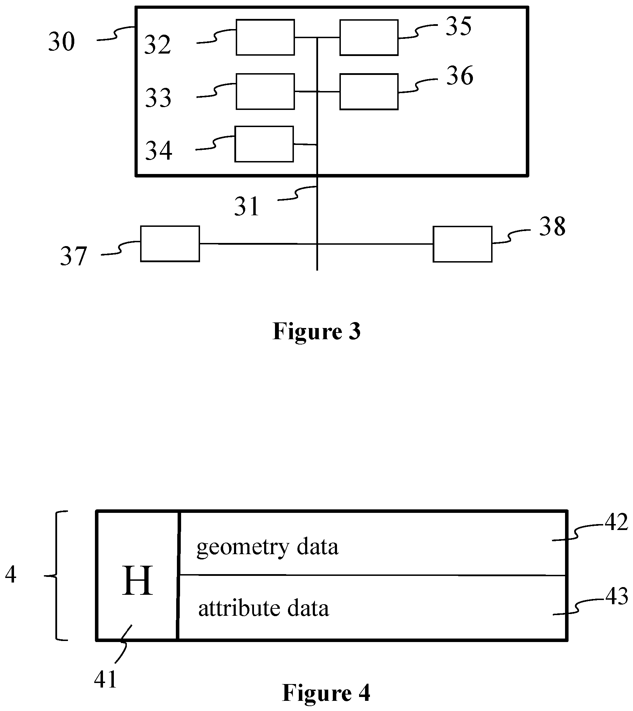

**Figure 3** shows an example architecture of a device 30 which may be configured to implement encoding and/or decoding methods according to an embodiment of the present principles. The device is linked with other devices via their bus 31 and/or via I/O interface 36.

Device 30 comprises following elements that are linked together by a data and address bus 31:
- a processor 32 (or CPU), which is, for example, a DSP (or Digital Signal Processor);
- a ROM (or Read Only Memory) 33;
- a RAM (or Random Access Memory) 34;
- a storage interface 35;
- an I/O interface 36 for reception of data to transmit, from an application; and
- a power supply (not represented in Figure 2), e.g. a battery.

In accordance with an example, the power supply is external to the device. In each of mentioned memory, the word « register » used in the specification may correspond to area of small capacity (some bits) or to very large area (e.g. a whole program or large amount of received or decoded data). The ROM 33 comprises at least a program and parameters. The ROM 33 may store algorithms and instructions to perform techniques in accordance with present principles. When switched on, the CPU 32 uploads the program in the RAM and executes the corresponding instructions.

The RAM 34 comprises, in a register, the program executed by the CPU 32 and uploaded after switch-on of the device 30, input data in a register, intermediate data in different states of the method in a register, and other variables used for the execution of the method in a register.

The implementations described herein may be implemented in, for example, a method or a process, an apparatus, a computer program product, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Device 30 is linked, for example via bus 31 to a set of sensors 37 and to a set of rendering devices 38. Sensors 37 may be, for example, cameras, microphones, temperature sensors, Inertial Measurement Units, GPS, hygrometry sensors, IR or UV light sensors or wind sensors. Rendering devices 38 may be, for example, displays, speakers, vibrators, heat, fan, etc.

In accordance with examples, the device 30 is configured to implement a method according to the present principles of encoding, decoding and rendering a 3D point clouds with attributes, and belongs to a set comprising:
- a mobile device;
- a communication device;
- a game device;
- a tablet (or tablet computer);
- a laptop;
- a still picture camera;
- a video camera.

**Figure 4** shows an example of an embodiment of the syntax of a stream when the data are transmitted over a packet-based transmission protocol. Figure 4 shows an example structure 4 of a stream encoding point clouds according to the present principle. The structure consists 'in a container which organizes the stream in independent elements of syntax. The structure may comprise a header part 41 which is a set of data common to every syntax element of the stream. For example, the header part comprises some of metadata about syntax elements, describing the nature and the role of each of them. The structure comprises a payload comprising an element of syntax 42 and at least one element of syntax 43 (there may be an element of syntax 43 for each type of attribute data, for instance one for the color, one for the reflectance, one for the normal vectors, etc.). Syntax element 42 comprises data representative of the geometry of the point cloud, that is, for example, a series of bits representative of the 3D blocks, for example represented as a trisoup.

The implementations described herein may be implemented in, for example, a method or a process, an apparatus, a computer program product, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, Smartphones, tablets, computers, mobile phones, portable/personal digital assistants ("PDAs"), and other devices that facilitate communication of information between end-users.

Implementations of the various processes and features described herein may be embodied in a variety of different equipment or applications, particularly, for example, equipment or applications associated with data encoding, data decoding, view generation, texture processing, and other processing of images and related texture information and/or depth information. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

## Claims

1. A method (510) for encoding a point cloud with attributes, the method comprising:
- obtaining an encoded geometry (512) and a decoded geometry (516) of the point cloud;
- detecting (515) holes in the decoded geometry and generating metadata (514) representative of coordinates of the detected holes;
- transferring (517) the attributes of the point cloud on the decoded geometry (516) to obtain transferred attributes (518); and
- encoding the encoded geometry (512), the transferred attributes (518) and the metadata (514) in a data stream.

2. The method of claim 1, further comprising adding points in the detected holes to obtain a reconstructed geometry and transferring the attributes of the point cloud on the reconstructed geometry to obtain the transferred attributes.

3. A device for encoding a point cloud with attributes, the device comprising a memory associated with a processor configured for:
- obtaining an encoded geometry (512) and a decoded geometry (516) of the point cloud;
- detecting (515) holes in the decoded geometry and generating metadata (514) representative of coordinates of the detected holes;
- transferring (517) the attributes of the point cloud on the decoded geometry (516) to obtain transferred attributes (518); and
- encoding the encoded geometry (512), the transferred attributes (518) and the metadata (514) in a data stream.

4. The device of claim 1, wherein the processor is further configured for adding points in the detected holes to obtain a reconstructed geometry and transferring the attributes of the point cloud on the reconstructed geometry to obtain the transferred attributes.

5. A method (520) for decoding a point cloud with attributes, the method comprising:
- retrieving, from a data stream, data representative of a geometry, of the attributes of the point cloud, and metadata representative of coordinates of holes;
- decoding (521) the geometry to obtain a decoded geometry;
- decoding (525) the attributes (522) for the decoded geometry; and
- using the metadata to add points to the decoded geometry and estimating the attributes of the added points as a function of decoded attributes.

6. The method of claim 5, wherein the metadata are used to add points to the decoded geometry to obtain a reconstructed geometry and wherein the attributes are decoded for the reconstructed geometry.

7. A device for decoding a point cloud with attributes comprising a memory associated with a processor configured for:
- retrieving, from a data stream, data representative of a geometry, of the attributes of the point cloud, and metadata representative of coordinates of holes;
- decoding (521) the geometry to obtain a decoded geometry;
- decoding (525) the attributes (522) for the decoded geometry; and
- using the metadata to add points to the decoded geometry and estimating the attributes of the added points as a function of decoded attributes.

8. The device of claim 7, wherein the metadata are used to add points to the decoded geometry to obtain a reconstructed geometry and wherein the attributes are decoded for the reconstructed geometry.

9. The method of claim 1, 2, 5 or 6 or the device of claim 2, 3, 7 or 8, wherein detecting holes comprises, for a non-occupied voxel of the decoded geometry, for each axis of a frame of reference of the decoded geometry, if neighbor voxels of the non-occupied voxel along the axis are non-occupied and if other neighbor voxels in a three-by-three volume around the non-occupied voxel form a ring, adding the non-occupied voxel to the detected holes.

10. The method or the device of claim 9, wherein the other neighbor voxels in a three-by-three volume around the non-occupied voxel form a ring if at least four of the other neighbor voxels are occupied.

11. The method of claim 1, 2, 5 or 6 or the device of claim 2, 3, 7 or 8, wherein detecting holes comprises, for two adjacent non-occupied voxels of the decoded geometry, for each axis of a frame of reference of the decoded geometry, if neighbor voxels of the two adjacent non-occupied voxels along the axis are non-occupied and if other neighbor voxels in a three-by- four volume around the two adjacent non-occupied voxels form a ring, adding the two adjacent non-occupied voxels to the detected holes.

12. The method of claim 1, 2, 5 or 6 or the device of claim 2, 3, 7 or 8, wherein detecting holes comprises, for a non-occupied voxel of the decoded geometry, for each combination of two axis of a frame of reference of the decoded geometry, if neighbor voxels of the non-occupied voxel along the combination of two axis are non-occupied and if other neighbor voxels in a three by three volume around the non-occupied voxel form a ring, adding the non-occupied voxel to the detected holes.
